# EUROPEAN PATENT APPLICATION

(11) **EP 4 847 384 A1**
(43) Date of publication of application: **02.12.2026**
(21) Application number: 26178538.0
(22) Date of filing: 13.05.2026
(51) Int. Cl.: B64C 27/473, B64C 27/00

(54) **ROTOR BLADE BALANCING WEIGHT RETENTION ASSEMBLY**

(30) Priority: 30.05.2025 NL 2040471
(71) Applicant: Kve Composites B.V., 2497 GB Den Haag (NL)
(72) Inventor: KLOPPENBURG, Frank, 2497 GB c/o THE HAGUE (NL)
(74) Representative: Arnold & Siedsma

(57) **Abstract**

Described is a balancing weight retention assembly for use in a composite rotor blade. The balancing weight retention assembly comprises a metallic balancing weight and a retention element. The metallic balancing weight has a length L and a cross-sectional dimension perpendicular to length L, wherein the cross-sectional dimension alternates in an increasing and decreasing fashion over length L. The retention element comprises a fibrous textile structure and at least partially surrounds the metallic balancing weight. The balancing weight retention assembly is advantageously used in a composite rotor blade by incorporation within a rotor blade composite structure.

## Description

### TECHNICAL FIELD OF THE INVENTION

The invention relates to a balancing weight retention assembly for use in a composite rotor blade. The invention also relates to a composite rotor blade that uses the invented balancing weight retention assembly.

### BACKGROUND OF THE INVENTION

To achieve stable aerodynamic behavior of a rotor blade made from composite materials, it may be necessary to adjust the center of gravity of the rotor blade using one or more balancing weights. Such balancing weight may be typically located at a tip end of the rotor blade and is provided to optimize the position of the center of gravity of the rotor blade in both the spanwise direction, extending from a hub end to the tip end of the rotor blade, and the chordwise direction, extending from a leading edge to a trailing edge of the rotor blade. Without adjustment of the location of the center of gravity, composite rotor blades typically have the center of gravity located between 25% and 50% of the chord (100% being the trailing edge of the blade), and <50% of the span (100% being the tip of the blade). After adjustment with a balancing weight, the chordwise center of gravity may for instance be located between 20-35% of the chord and between 50%-70% of the span, a more favorable location in view of aerodynamic behaviour.

According to the state of the art, a balancing weight provided in the leading edge of a rotor blade typically comprises a rod made from high-density metal such as lead or tungsten. Since the balancing weight is placed at the leading edge near the tip of the rotor blade, the concentration of mass provided at the tip of the rotor blade causes higher centrifugal loads on the rotor blade structure. To ensure safe use, special measures must be taken to prevent the balancing weight from shifting within the rotor blade due to these high centrifugal loads, or, in a worst case, from escaping from the rotor blade.

Balancing weight retention is usually provided by some form of adhesive bonding of the balancing weight to the composite structure. High-quality of the adhesive bond is paramount, given the safety criticality of the balancing weight retention. However, it has proven to be difficult to control or determine the quality of this bond.

Balancing weight retention may also be provided by some form of mechanical fastening of the balancing weight to the composite structure. US7097427B2 for instance discloses a rotor blade balancing weight retention assembly which uses fastener bolts (113) to bolt the balancing weights (109) to a nut plate (115) comprised within the rotor blade. Such assembly is less viable for retention of balancing weights, in part due to the bulky nut plate that causes problems of space.

Mechanical fastening options in general are less favorable, since the structural configuration in rotor blades made from composite materials typically comprises a sandwich structure having a structural composite skin. The core material usually does not have sufficient strength for mechanical fastening and the structural integrity of the composite skin is compromised by mechanical fasteners such as bolts or screws, since they may interrupt the fibers of the composite material, and/or may cause delamination of the composite material at holes. Additionally, the combination of a carbon composite material and a metal fastener is prone to galvanic corrosion when the metal is exposed to the environment.

Balancing weight retention may, alternatively or in addition to adhesive bonding, be provided by a retention element such as a strap or loop which is attached to or wrapped around the balancing weight. Such a solution for instance is disclosed in US5462409A, wherein a prepreg strap is wrapped around a leading-edge balancing weight. This mode of retention, however, is less reliable as the high centrifugal load is concentrated on a small section of the strap.

Consequently, what is needed is a simple and failsafe and/or fatigue- and impact-damage tolerant solution for retaining a balancing weight within a composite rotor blade, preferably at a position close to the leading edge of the composite rotor blade.

### SUMMARY OF THE INVENTION

It is an object of the invention to provide an improved balancing weight retention assembly for use in composite rotor blades, the assembly overcoming at least some of the disadvantages of the known rotor blade balancing weight retention assemblies.

The invention provides for this purpose a balancing weight retention assembly in accordance with claim 1. According to the invention, a balancing weight retention assembly for use in a composite rotor blade is provided. The balancing weight retention assembly comprises a metallic balancing weight and a retention element. The metallic balancing weight has a length L and a cross-sectional dimension perpendicular to the length L, wherein the cross-sectional dimension alternates in an increasing and decreasing fashion over the length L. The retention element comprises a fibrous textile structure and at least partially surrounds the metallic balancing weight.

In another aspect of the invention, a composite rotor blade is provided, comprising a rotor blade composite structure and a balancing weight retention assembly according to the first aspect of the invention, wherein the balancing weight retention assembly is incorporated within the rotor blade composite structure.

It has turned out that the alternating cross-sectional dimension allows the metallic balancing weight to be shape-locked into place by the retention element when the fibrous textile structure of the retention element is at least partly cured with a resin. This shape-locking provides a retention mode that is failsafe, even in case of fatigue damage of the metallic balancing weight, thereby removing the need to inspect the metallic part for fatigue in service.

The retention mode of shape-locking the balancing mass within a fibrous textile structure has the added benefit that it uses a relatively thin material that, in an embodiment, is integrated into the rotor blade composite structure during liquid transfer molding. Compared to known methods, the invention does not require bulky mechanical fasteners such as nuts and bolts or rivets, thus allowing for installation of the balancing weight retention assembly at a position close to the leading edge of the composite rotor blade and without having to interrupt the fibers of the composite skin of the rotor blade composite structure.

Furthermore, the alternating cross-sectional dimension of the metallic balancing weight enables a spreading of the centrifugal load along the surface of the metallic balancing mass, making the retention mode of shape-locking the balancing mass more reliable. It also enables the use of a single, longitudinal balancing weight, thereby simplifying production of the composite rotor blade.

### DETAILED DESCRIPTION OF THE INVENTION

The invention as disclosed in summary above will now be elucidated further below.

Herein, the wording "weight" refers to an object of known mass, and not to the gravitational force that is exerted on this object of known mass.

The metal of the metallic balancing weight may comprise an elemental metal or a metal alloy, preferably having a relatively high density. Using a high-density material may enable adjustment of the center of gravity of a composite rotor blade with a compact metallic balancing weight. Examples of suitable elemental metals include lead, tungsten, iron, copper, nickel, and zinc. Examples of suitable metals alloys include lead-antimony alloy, tungsten carbide, tungsten heavy alloy, steel, bronze, brass, Hastelloy, Inconel, and Monel. The metallic balancing weight has a length L and a cross-sectional dimension perpendicular to the length L, wherein the cross-sectional dimension alternates in an increasing and decreasing fashion over length L. The cross-sectional dimension of the metallic balancing weight may form any shape that is alternating in an increasing and decreasing fashion but is preferably in the shape of a wave. Examples of suitable wave shapes for the wave-shaped edge include a sine wave, triangular wave, square wave, rectangular wave, or sawtooth wave. Preferably, the alternating pattern is a sine wave.

As will be appreciated by those skilled in the art, a sine wave has a waveform of the trigonometric sine function. A rectangular wave has a waveform in which the amplitude consistently alternates between having a fixed minimum and maximum value, typically alternating instantaneously, such that the waveform has right angles. A square wave is a special variant of the rectangular wave where the amplitude of the wave equals half the period of the wave. A triangular wave has a waveform that also consistently alternates between a fixed minimum and maximum value, but where the alternation is at a steady, gradual pace such that the waveform has sharp angles. A sawtooth wave comprises properties of both a rectangular wave and a triangular wave, by having a waveform that alternates between steady, gradual transition from a minimum to a maximum value, followed by an instantaneous reversion to the minimum value (or *vice versa,* i.e. steady, gradual transition from a maximum to a minimum value, followed by an instantaneous reversion to the maximum value).

The alternating cross-sectional dimension may extend along the entirety of the length L of the metallic balancing weight, but may also extend along sections of length L. When the alternating cross-sectional dimension only extends along sections of length **L,** it is preferable that these sections at least comprise both ends of length L. This may increase the likelihood of successful retention of the metallic balancing weight in case of failure due to, for example, fatigue or impact damage.

In embodiments of the invention having a metallic balancing weight with a wave-shaped cross-sectional dimension, the wave shape is characterized in that each wave shape has a period and an amplitude. The period of the wave shape is measured as the distance between two crests of the wave, and the amplitude is measured as the distance between a crest and a trough of the wave shape. Preferably, an amplitude-to-period ratio of the wave-shaped cross-sectional dimension is from 1:2 to 1:25, more preferably from 1:3 to 1:20, even more preferably from 1:4 to 1:15, and most preferably from 1:5 to 1:10. An amplitude-to-period ratio that is too high may reduce the load carrying capacity of the fibrous textile structure used in the retention element. A ratio that is too low may make application of the fibrous textile structure more difficult and may cause too high local loads on the fibrous textile material.

The alternating cross-sectional dimension of the metallic balancing weight has a maximum and minimum circumference. Preferably, the metallic balancing weight has a maximum circumference that is not more than 2.0 times, preferably between 1.5 and 2.0 times the minimum circumference. Such sizing of the cross-sectional dimension allows for a good fit between the surface of the metallic balancing weight and the fibrous textile structure of the retention element. A good fit is important for adhesion and/or shape-locking of the metallic balancing weight in the retention element upon curing the fibrous textile structure with a resin in liquid transfer molding.

In embodiments of the invention, the metallic balancing weight has two edges along the length L, wherein one edge is substantially straight, and another edge has an alternating shape. Herein, the alternatingly-shaped edge provides the alternating cross-sectional dimension. Preferably, the straight edge is substantially opposite the alternatively shaped edge. Preferably the alternatingly shaped edge has the shape of a wave, such as a sine wave, triangular wave, square wave, rectangular wave, or sawtooth wave, more preferably the shape of a sine wave. The straight edge enables positioning the metallic balancing weight close to the leading edge of the composite rotor blade. The straight edge may exhibit a light curvature.

In alternative embodiments, the metallic balancing weight might also have two edges with an alternating shape. Preferably, the alternatingly shaped edges are substantially opposite each other. Such embodiments may be preferred when the metallic balancing weight does not need to be positioned close to the leading edge, for example when the center of gravity only needs to be adjusted in the spanwise direction. The additional alternatingly shaped edge may be preferred to increase the retention efficiency by increasing the surface of adhesion and interlocking, thereby increasing the efficiency of both retention modes.

In another embodiment of the invention, the metallic balancing weight has no clear edges. This is the case when the cross-sectional dimension alternates along length L in all directions. An example is a metallic balancing weight wherein the cross-sectional dimension is radially symmetrical along the length L of the metallic balancing weight. One can envisage such a shape as resembling a bead chain. Such an embodiment could be realized by placing metal beads on a rod or stretched wire, preferably a metal rod or stretched wire. However, other three-dimensional shapes with no edges and without radial symmetry may also be envisaged.

The metallic balancing weight is preferably produced through molding, casting, computer numerical control (CNC) machining, or additive manufacturing, more preferably through additive manufacturing. When using an additive manufacturing process, the metallic balancing weight obtained will typically have a surface roughness that provides good adhesion to a resin, often making post-processing of the metallic balancing weight redundant. The metallic balancing weight preferably has a surface roughness in the range of "medium" to "course" according to ISO 8503-2. Where needed, the targeted roughness may be achieved by post-treatments such as grit-blasting. In preferred embodiments, the metallic balancing weight comprises positioning pins. These may be used to align the metallic balancing weight when placing it in the rotor blade composite structure. The metallic balancing mass may have any number of positioning pins but preferably comprises at least two positioning pins. When the metallic balancing mass comprises edges, the positioning pins are preferably positioned at an edge of the metallic balancing mass that faces the trailing edge of the composite rotor blade. Thus, when the metallic balancing mass comprises a straight edge and an alternatingly shaped edge, the positioning pins are preferably positioned at the alternatingly shaped edge. Within the balancing weight retention assembly, the positioning pins preferably protrude the fibrous textile structure of the retention element. Such protrusion may prevent the positioning pins from interrupting a preferred tight fit between the fibrous textile structure and a surface of the metallic balancing weight. The positioning pins may have any shape but preferably have a shape that cooperates and interlocks with slots in the foam core of the composite rotor blade such that shifting of the metallic balancing weight during handling in manufacturing may be partially or fully eliminated.

According to the invention, the retention element comprises a fibrous textile structure and at least partially surrounds the metallic balancing weight. The inventive idea of combining a retention element and a metallic balancing weight with an alternating cross-sectional dimension provides a mode of retention for the metallic balancing weight by shape-locking it inside the fibrous textile structure of the retention element once it is cured with a resin. In case the metallic balancing weight fractures, due to, for example, fatigue or impact, the fragments of the metallic balancing weight may be substantially retained by the retention element. This increases the damage tolerance of the composite rotor blades with metallic balancing weights.

Preferably, the retention element covers at least 80% of the surface of the metallic balancing weight, more preferably at least 90%, even more preferably at least 95%.

The retention element comprises a fibrous textile structure, preferably a dry-fiber textile structure such as a dry-fiber unidirectional fabric, plain weave fabric, twill weave fabric, satin weave fabric, monoaxial fabric, biaxial fabric, triaxial fabric, multiaxial fabric, biaxial braid, triaxial braid, warp knitted fabric, weft knitted fabric, multiaxial stitched fabric, or non-crimp fabric. The shape of the fibrous textile structure of the retention element is selected from one of a wire, sheet, or sleeve. In a preferred embodiment, the fibrous textile structure of the retention element is a dry-fiber braided sleeve. In a further preferred embodiment, the dry-fiber braided sleeve has an alternating cross-sectional dimension that cooperates with the alternating cross-sectional dimension of the metallic balancing weight. The cooperating alternating cross-sectional dimension enable a tight fit of the retention element around the metallic balancing weight. The tighter the fit, the more effective the fibrous textile structure will be at retaining the metallic balancing weight.

The retention element may also comprise a resin, preferably a cured resin. The balancing weight retention assembly may therefore comprise a metallic balancing mass surrounded by a fibrous textile element which is cured with a resin, prior to being incorporated within the rotor blade composite structure to form a composite rotor blade. To improve bonding in liquid transfer molding of the composite rotor blade, the surface roughness of the cured balancing weight retention assembly may be increased, such as by sanding or grit-blasting.

In preferred embodiments, the balancing mass is surrounded by dry fiber retention element, whereafter the balancing mass with retention element is placed in the dry fiber blade pre-form. The pre-form, including the balancing weight with (still dry fiber) retention element, is then infused with resin by liquid transfer molding to make the composite structure, as will be elucidated further below.

The fibrous textile structure of the retention element preferably has a surface weight of between 100 and 700 grams per square meter. The fibrous textile structure of the retention element preferably comprises a high strength fiber reinforcement, wherein the high strength fibers comprise at least one of glass fibers, carbon fibers, and/or aramid fibers. When using aramid fibers, these are preferably used in combination with glass or carbon fibers to improve infusion of the fibers in liquid transfer molding.

The invention in a second aspect provides a composite rotor blade comprising a rotor blade composite structure and a balancing weight retention assembly in accordance with the first aspect of the invention, wherein the balancing weight retention assembly is incorporated within the rotor blade composite structure.

The balancing weight retention assembly has a length L which is preferably oriented substantially parallel to the spanwise direction extending from the hub end to the tip end of the composite rotor blade.

The rotor blade composite structure may comprise a foam core, a composite skin, a cured resin, and preferably composite structural plies.

The composite rotor blade is preferably manufactured by liquid transfer molding. The rotor blade composite structure may comprise a composite skin, wherein the fibrous textile structure of the retention element may be fused with the composite skin in liquid transfer molding. The rotor blade composite structure, and incorporated within it the balancing weight retention assembly, may constitute a fiber sandwich structure in which a dry fiber pre-form is produced and subsequently infused with liquid resin and cured in a close mold to obtain the composite rotor blade. The fibrous textile structure of the balancing weight retention assembly may be infused with resin to create a fiber-reinforced encapsulating layer around the metallic balancing weight, with the purpose of retaining the metallic balancing weight.

In an embodiment, the metallic balancing weight has two edges along length L, wherein one edge is substantially straight, and one edge has an alternating shape. The straight edge faces the leading edge, and the alternatingly shaped edge faces the trailing edge of the composite rotor blade.

To achieve stable aerodynamic behavior in an aerodynamic part of the composite rotor blade, the center of gravity of the composite rotor blade is adjusted using the balancing weight retention assembly. The aerodynamic part is the part of the composite rotor blade that generates lift. The aerodynamic part of the composite rotor blade has a center of gravity and a chord. In preferred embodiments, the center of gravity of the aerodynamic part of the composite rotor blade is located between 10% and 40% of the chord, more preferably between 15% and 35%, even more preferably between 20% and 30%. Herein, 0% chord represents the leading edge and 100% the trailing edge of the aerodynamic part of the composite rotor blade. Thus, the balancing weight retention assembly is used to shift the center of gravity of the aerodynamic part towards the leading edge of the composite rotor blade.

To shift the center of gravity of the composite rotor blade towards the leading edge, the balancing weight retention assembly is preferably positioned close to the leading edge. The balancing weight retention assembly has a center of mass, wherein this center of mass is preferably located between 5% and 15% of the chord of the composite rotor blade, more preferably at less than 10% of the chord.

Furthermore, the metallic balancing weight is preferably made of a high-density material to enable adjustment of the center of gravity with a compact metallic balancing weight. In preferred embodiments, the mass of the balancing weight retention assembly accounts for between 5% and 30% of the mass of the composite rotor blade, more preferably between 10% and 20%. Preferably, the balancing weight retention assembly has a density of at least 5 times the density of the rotor blade composite structure, such as at least 6 times, at least 7 times, at least 8 times, at least 9 times or at least 10 times.

In preferred embodiments, the metallic balancing weight comprises positioning pins and the rotor blade composite structure comprises a foam core, wherein the foam core comprises a shape and slots. The alternating cross-sectional dimension of the metallic balancing weight preferably cooperates with the shape of the foam core and the positioning pins of the metallic balancing weight preferably cooperate with slots in the foam core. These features may help to precisely position the balancing weight retention assembly within the composite rotor blade. The slots in the foam core and the positioning pins on the metallic balancing weight are preferably shaped such that the pins not only cooperate with the slots but also interlock with the slots. This may help to prevent the metallic balancing weight from shifting during handling in manufacturing.

### BRIEF DESCRIPTION OF THE FIGURES

Examples of the invention will now be elucidated with reference to the following figures, without however being limited thereto. In the figures:
Figure 1a schematically shows a metallic balancing weight in accordance with an embodiment of the invention;
Figure 1b shows a balancing weight retention assembly in accordance with an embodiment of the invention;
Figure 2a schematically shows a side view of a metallic balancing weight in accordance with an embodiment of the invention;
Figure 2b schematically shows detailed cross-sectional views of a metallic balancing weight in accordance with an embodiment of the invention;
Figure 3 schematically shows a cross-sectional view of a preform core assembly of a composite rotor blade in accordance with an embodiment of the invention; and
Figure 4 schematically shows a cross-sectional view of a composite rotor blade in accordance with an embodiment of the invention.

### DESCRIPTION OF EXEMPLARY EMBODIMENTS

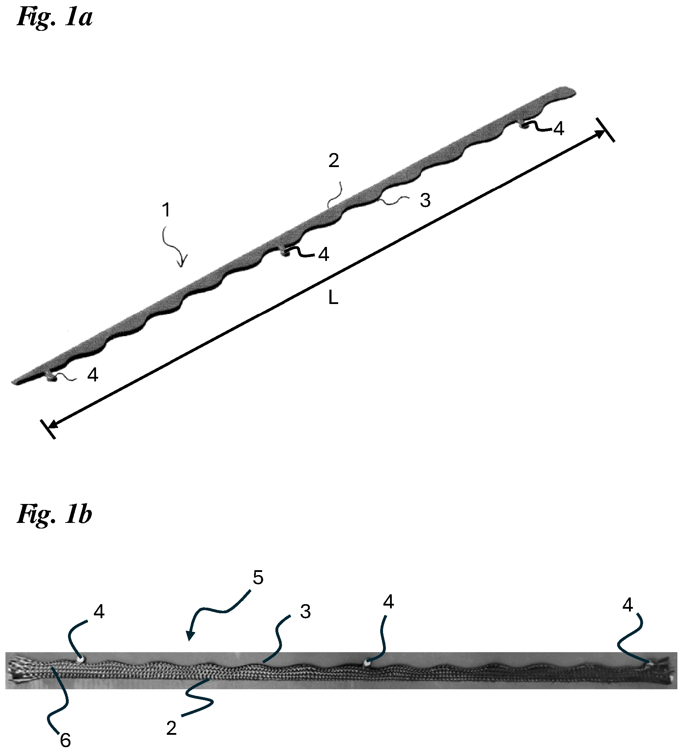

Figure 1a schematically shows an embodiment of a metallic balancing weight 1 with length L. The metallic balancing weight 1 has two edges (2, 3), of which one edge 2 is substantially straight and one edge 3 has an alternating shape, in particular a wave shape, more specifically the shape of a sine wave. The metallic balancing weight 1 furthermore has three positioning pins 4.

Figure 1b shows an embodiment of a balancing weight retention assembly 5 in accordance with the first aspect of the invention. The balancing weight retention assembly 5 comprises a metallic balancing weight 1 similar to the embodiment shown in Figure 1a, having a straight edge 2 and an alternatingly shaped edge 3, in particular an edge shaped like a sine wave, and further comprises three positioning pins 4, arranged along the alternatingly shaped edge 3. The metallic balancing weight 1 is partially surrounded by a retention element 6 comprising a fibrous textile structure in the form of a braid. The three positioning pins 4 protrude the fibrous textile structure of the retention element 6. The metallic balancing weight 1 is made of 316 stainless steel and the fibrous textile structure of the retention element 6 is made of carbon fiber. The metallic balancing weight 1 was produced through additive manufacturing and has a surface roughness of "course" according to ISO 8503-2.

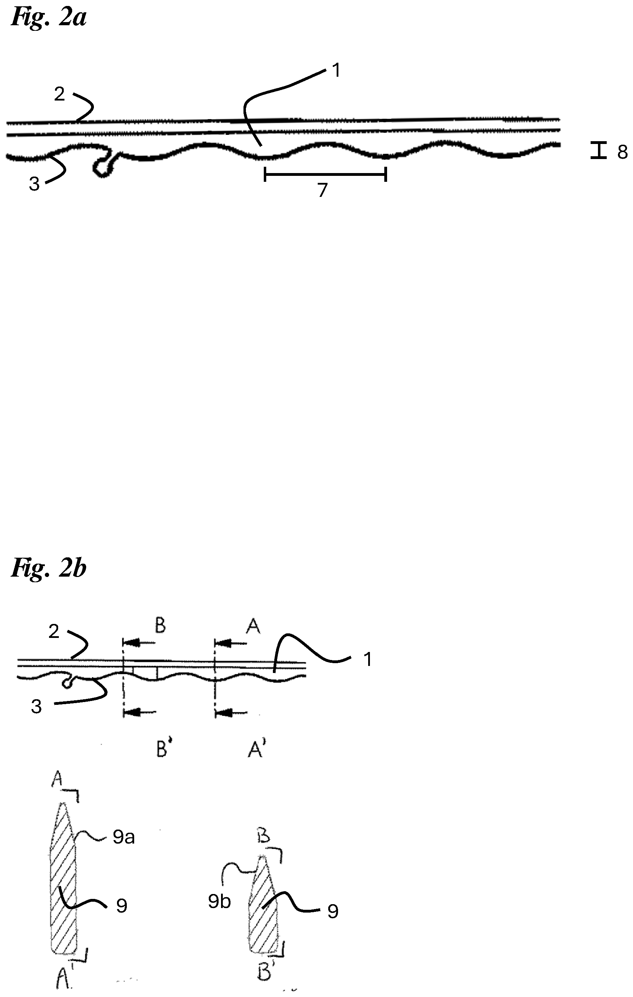

Figure 2a schematically shows a side view of an embodiment of a metallic balancing weight 1 in accordance with the first aspect of the invention. The metallic balancing weight 1 has a straight edge 2 and an alternatingly shaped edge 3, in particular an edge shaped like a sine wave. The wave shape of the metallic balancing weight 1 has a period 7 and an amplitude 8. The amplitude-to-period ratio of the shown embodiment is around 1:8 to 1:9.

Figure 2b schematically shows detailed cross-sectional views of an embodiment of a metallic balancing weight 1 in accordance with the first aspect of the invention. The metallic balancing weight has two edges (2,3), wherein one edge 2 is substantially straight and one edge has an alternating shape 3, in particular a wave shape, more specifically the shape of a sine wave. Cross sections are taken perpendicular to the length L along line (A-A'), which is located at the crest or maximum of the wave shape, and along line (B-B'), which is located at the trough or minimum of the wave shape. The alternatingly shaped edge 3 provides an alternating cross-sectional dimension 9. The maximum circumference 9a of the alternating cross-sectional dimension 9 is located along line (A-A') and the minimum circumference 9b is located along line (B-B'). The maximum circumference 9a of the metallic balancing weight 1 is preferably not more than two times the minimum circumference 9b. For the shown embodiment, the minimum circumference of the cross section 9a is approximately 1.4 times the maximum circumference 9b.

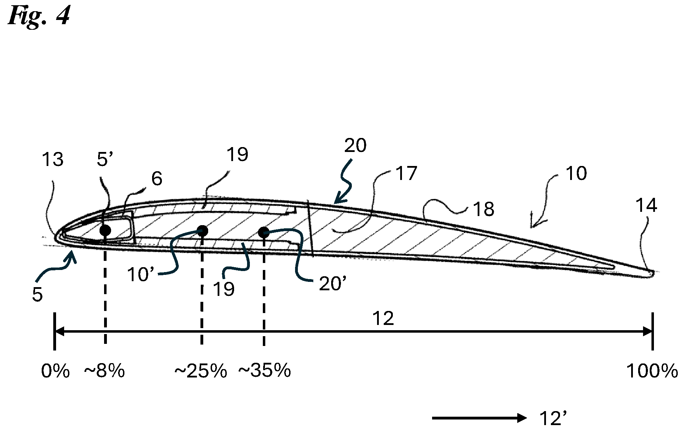

Figure 4 schematically shows a cross-sectional view of an embodiment of a composite rotor blade 10 in accordance with the second aspect of the invention. The composite rotor blade 10 comprises a rotor blade composite structure 20 and a balancing weight retention assembly 5 in accordance with the first aspect of the invention. The balancing weight retention assembly 5 is incorporated within the rotor blade composite structure 20. The balancing weight retention assembly 5 is similar to the embodiment shown in Figure 1b, having a straight edge 2(opposite an alternatingly shaped edge 3. The rotor blade composite structure comprises a foam core 17, a composite skin 18 and composite structural plies 19. The composite rotor blade 10 may be manufactured by liquid transfer molding, wherein the fibrous textile structure of the retention element 6 is fused with the composite skin 18 in liquid transfer molding. The balancing weight retention assembly 5 accounts for 11% of the mass of the composite rotor blade. The balancing weight retention assembly 5 has a density which is 7 times an average density of the rotor blade composite structure.

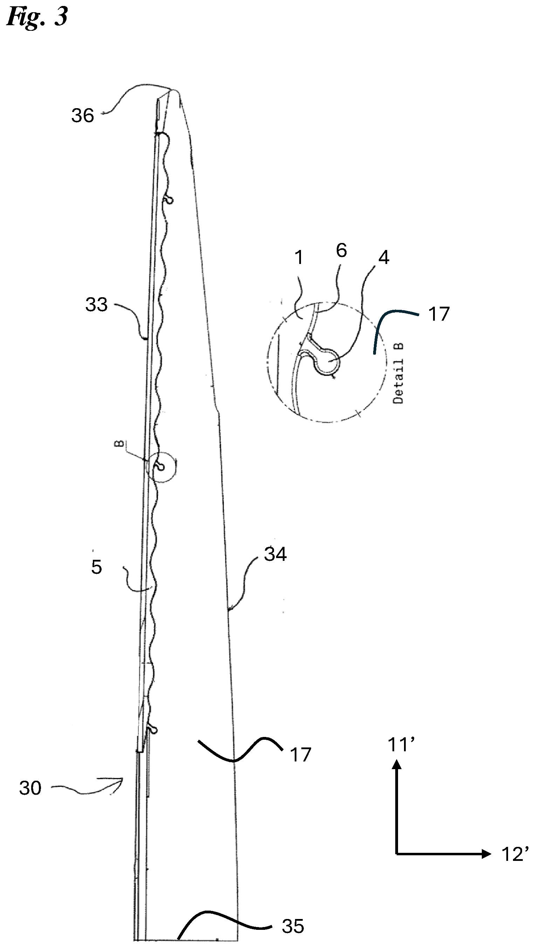

Figure 3 schematically shows a preform core assembly 30 extending between a hub end 35 thereof and a tip end 36 of the preform core assembly. The balancing weight retention assembly 5 is positioned with its alternatingly shaped edge 3 facing a trailing edge 34 of the preform core assembly and the straight edge 2 facing a leading edge 33 of the preform core assembly 30 such that the period of the wave shape of the alternatingly shaped edge 3 extends in the direction 11' of a rotor blade span 11 and its amplitude extends in the direction 12' of a rotor blade chord 12. The balancing weight retention assembly 5 furthermore is positioned substantially at the leading edge 33 and near the tip end 36 of the preform core assembly 30, and, after assembly, also substantially at the leading edge 13 and near the tip end 16 of the composite rotor blade 10, as shown in figure 4. Between the balancing weight retention assembly 5 and the trailing edge 34 of the preform core assembly 30 is provided a foam core 37. After assembly, the foam core 37 is provided between the balancing weight retention assembly 5 and the trailing edge 14 of the composite rotor blade 10. The alternating shape of the metallic balancing weight 1 cooperates with a shape of the foam core 17 and the positioning pins 4 of the metallic balancing weight 1 cooperate with slots in the foam core 17.

As shown in figure 4, the composite rotor blade 10 along the direction 12' of its chord 12 comprises composite structural plies 19 which give the structure strength in the spanwise direction. The composite rotor blade 10 has a leading edge 13 and a trailing edge 14. The fibrous textile structure of the retention element 6 of the balancing weight retention assembly 5 is fused with the composite skin 18. The center of mass 5' of the balancing weight retention assembly 5 is positioned at approximately 8% of the chord 12. The center of gravity 20' of the rotor blade composite structure 20, thus excluding the balancing weight retention assembly 5, is positioned at approximately 35% of the chord 12. By incorporating the balancing weight retention assembly 5 within the rotor blade composite structure 20, the center of gravity 10' of the resulting composite rotor blade 10 is shifted towards the leading edge 13 of the composite rotor blade 10. **In** the embodiment shown, the center of gravity 10' of the composite rotor blade 10 is positioned at approximately 25% of the chord 12.

From example embodiments it has been established by the inventors that adding the weight may vary the center of gravity from an initial center of gravity 20' of the rotor blade composite structure 20, thus excluding the balancing weight retention assembly 5, of between 25-45% of the chord to an adjusted center of gravity 10' of the composite rotor blade 10, thus including the balancing weight retention assembly 5, of between 20-30% of the chord. This does not exclude that other variations are also possible.

## Claims

1. A balancing weight retention assembly for use in a composite rotor blade, the balancing weight retention assembly comprising a metallic balancing weight and a retention element, wherein the metallic balancing weight has a length L and a cross-sectional dimension perpendicular to the length L, wherein the cross-sectional dimension alternates in an increasing and decreasing fashion over the length L, wherein the retention element comprises a fibrous textile structure, and wherein the retention element at least partially surrounds the metallic balancing weight.

2. A balancing weight retention assembly as claimed in claim 1, wherein the retention element surrounds at least 80% of the surface of the metallic balancing weight, more preferably at least 85%, even more preferably at least 90%, and most preferably at least 95% of the metallic balancing weight.

3. A balancing weight retention assembly as claimed in claim 1 or 2, wherein the cross-sectional dimension of the metallic balancing weight alternates in an increasing and decreasing fashion over length L in the shape of a wave, such as a sine wave, triangular wave, square wave, rectangular wave, or sawtooth wave, preferably a sine wave.

4. A balancing weight retention assembly as claimed in any one of claims 1-3, wherein the alternating cross-sectional dimension of the metallic balancing weight has a maximum circumference and a minimum circumference, wherein the maximum circumference is not more than 2.0 times, preferably between 1.5 and 2.0 times the minimum circumference.

5. A balancing weight retention assembly as claimed in any one of claims 1-4, wherein the metallic balancing weight is produced through molding, casting or additive manufacturing, preferably through additive manufacturing.

6. A balancing weight retention assembly as claimed in any one of claims 1-5, wherein the metallic balancing weight comprises positioning pins, wherein the positioning pins optionally protrude the fibrous textile structure of the retention element.

7. A balancing weight retention assembly as claimed in any one of claims 1-6, wherein the fibrous textile structure of the retention element is a dry-fiber textile structure such as a dry-fiber unidirectional fabric, plain weave fabric, twill weave fabric, satin weave fabric, monoaxial fabric, biaxial fabric, triaxial fabric, multiaxial fabric, biaxial braid, triaxial braid, warp knitted fabric, weft knitted fabric, multiaxial stitched fabric, or non-crimp fabric.

8. A balancing weight retention assembly as claimed in any one of claims 1-7, wherein the fibrous textile structure of the retention element comprises a high strength fiber reinforcement, comprising at least one of glass fibers, carbon fibers, and/or aramid fibers, and wherein the retention element optionally comprises a cured resin.

9. A composite rotor blade, comprising a rotor blade composite structure and a balancing weight retention assembly as claimed in any one of claims 1-8, wherein the balancing weight retention assembly is incorporated within the rotor blade composite structure.

10. A composite rotor blade as claimed in claim 9, wherein the length L of the balancing weight retention assembly is oriented substantially parallel to a spanwise direction extending from a hub end to a tip end of the composite rotor blade.

11. A composite rotor blade as claimed in claim 10, wherein the metallic balancing weight has two edges along the length L, wherein one edge is substantially straight and one edge has an alternating shape, and wherein the straight edge faces a leading edge and the alternatingly-shaped edge faces a trailing edge of the composite rotor blade.

12. A composite rotor blade as claimed in any one of claims 10-11, wherein the composite rotor blade has a center of gravity and a chord, wherein the center of gravity is located between 10% and 40% of the chord, more preferably between 15% and 35%, even more preferably between 20% and 30%.

13. A composite rotor blade as claimed in any one of claims 10-12, wherein the composite rotor blade has a chord, and the balancing weight retention assembly has a center of mass, wherein the center of mass is located between 5% and 15% of the chord of the composite rotor blade, preferable at less than 10% of the chord.

14. A composite rotor blade as claimed in any one of claims 10-13, wherein the balancing weight retention assembly has a density of at least 5 times a density of the rotor blade composite structure, such as at least 6 times, at least 7 times, at least 8 times, at least 9 times or at least 10 times.

15. A composite rotor blade as claimed in any one of claims 10-14, wherein the metallic balancing weight comprises positioning pins, wherein the rotor blade composite structure comprises a foam core comprising slots, and wherein the positioning pins of the metallic balancing weight cooperate with the slots in the foam core.
